# EUROPÄISCHE PATENTSCHRIFT

(11) **EP 2 988 105 B1**
(45) Veröffentlichungstag und Bekanntmachung des Hinweises auf die Patenterteilung: **16.06.2021**
(21) Anmeldenummer: 15002442.0
(22) Anmeldetag: 18.08.2015
(51) Int. Cl.: G01V 1/00, G08B 13/16, G10L 25/51, G06K 9/00, G01H 3/00, G08B 21/04

(54) **VORRICHTUNG UND VERFAHREN ZUR AUTOMATISCHEN ERKENNUNG UND KLASSIFIZIERUNG VON HÖRBAREN AKUSTISCHEN SIGNALEN IN EINEM ÜBERWACHUNGSBEREICH**
DEVICE AND METHOD FOR THE AUTOMATIC RECOGNITION AND CLASSIFICATION OF AUDIBLE ACOUSTIC SIGNALS IN A MONITORED AREA
PROCEDE ET DISPOSITIF DE RECONNAISSANCE AUTOMATIQUE ET CLASSEMENT DE SIGNAUX ACOUSTIQUES AUDIBLES DANS UNE ZONE DE SURVEILLANCE

(30) Priorität: 20.08.2014 DE 102014012184
(43) Veröffentlichungstag der Anmeldung: 24.02.2016
(73) Patentinhaber: HST High Soft Tech GmbH, 69126 Heidelberg (DE)
(72) Erfinder: Heintz, Frank, D-08064 Zwickau (DE)
(74) Vertreter: Dreykorn-Lindner, Werner

(56) Entgegenhaltungen:
- DE-A1-102007 051 261
- DE-A1-102012 211 154
- US-A1- 2009 157 575
- US-A1- 2012 010 835
- US-A1- 2012 163 127
- US-A1- 2012 262 294

## Beschreibung

Die Erfindung betrifft eine Vorrichtung zur automatischen Erkennung und Klassifizierung von hörbaren akustischen Signalen in einem Überwachungsbereich gemäß dem Patentanspruch 1. Weiterhin betrifft die Erfindung, gemäß Patentanspruch 4, ein Verfahren hierzu.

Überwachungssysteme zur Überwachung einer Freifläche oder einem Bereich in einem Gebäude oder Gebäudekomplex, wobei das Überwachungssystem eine Mehrzahl von Mikrofonen umfasst, welche in dem Überwachungsbereich anordenbar und/oder angeordnet sind und welche zur Aufnahme von Audiosignalen eines Objekts als Audiosignalquelle in dem Überwachungsbereich ausgebildet sind, sind seit langem bekannt. Dabei werden in der Regel Audiofrequenzen des menschlichen Hörbereichs, welche im Bereich von ca. 20Hz bis 20kHz liegen, erfasst. Beispielsweise ist aus der DE 10 2012 211 154 A1 ein Überwachungssystem bekannt, welches ein Analysemodul zur Klassifizierung des Audiosignals und zur Ausgabe einer Klassifikationsinformation umfasst. Die Klassifikationsinformation ist insbesondere eine inhaltliche Beschreibung des Audiosignals und beschreibt die Geräuschart. Im Speziellen bezeichnet die Klassifikationsinformation die Entstehungsart des Audiosignals. Weiterhin ist ein Analysemodulvorgesehen, welches ein anliegendes Audiosignal mit einem Muster und/oder einem abgespeicherten Audiosignal vergleicht. Insbesondere ist das Analysemodul derart ausgebildet, ein Audiosignal als unbeabsichtigtes Geräusch, nämlich als ein Einbruchsgeräusch und/oder als ein Beschädigungsgeräusch und/oder als ein Störgeräusch einer Aktion des Objekts als Geräuschart zu klassifizieren. Da nicht zu erwarten, dass derartige Personen bei einem unautorisierten Aufhalten im Überwachungsbereich schreien oder eine Trillerpfeife betätigen, ist das Überwachungssystem auf die unbeabsichtigten Geräusche ausgerichtet, die die Personen entweder nicht verhindern können (Schrittgeräusche oder Geräusche einer Aktion) oder aus Versehen nicht ausreichend verhindern. Das Überwachungssystem umfasst ferner ein Lokalisierungsmodul zur Lokalisierung der Position des Objekts durch akustische Ortung der Position der Audiosignalquelle des klassifizierten Audiosignals in dem Überwachungsbereich über die Mikrofone und zur Ausgabe einer Positionsinformation. Dabei ist das Lokalisierungsmodul zur Lokalisierung der Person der Audiosignalquelle des klassifizierten Audiosignals durch akustische Kreuzortung der Audiosignalquelle, insbesondere über Laufzeitmessung des Audiosignals von mindestens zwei und insbesondere mindesten drei Mikrofone ausgebildet. Die Klassifikationsinformation und die Positionsinformation bilden einen Teil eines Objektdatensatzes, wobei der Objektdatensatz als Überwachungsergebnis ausgebbar und/oder weiterverarbeitbar ist. Hierzu umfasst das Überwachungssystem ein Auswertemodul zur Auswertung des Objektdatensatzes und zur Generierung eines Alarmsignals, wobei es auch vorgesehen ist, dass das Auswertemodul mindestens zwei Objektdatensätze mit unterschiedlichen Klassifikationsinformationen zur Auswertung verwendet. Bei einer Weiterbildung weist das Auswertemodul eine Verfolgungseinheit auf, wobei diese ausgebildet ist, aus mehreren Objektdatensätzen einen Metadatensatz für das Objekt zu erstellen. In diesem Metadatensatz werden beispielsweise zwei, drei, vier oder mehr mögliche Objektdatensätze des Objekts aufgenommen und das Auswertemodul umfasst eine Filtereinheit zur Filterung des Metadatensatzes, wobei Objektdatensätze, die einem Bewegungsmodell des Objekts widersprechen, ausgefiltert werden. Schließlich umfasst das Überwachungssystem eine Überwachungszentrale, welche eine Audiospeichereinrichtung aufweist oder mit dieser verbunden ist, wobei auf der Audiospeichereinrichtung eine Audioaufnahme des Audiosignals, insbesondere des Original-Audiosignals des klassifizierten Audiosignals abgespeichert ist. In einer möglichen Ausgestaltung umfasst die Überwachungszentrale eine Bedieneinheit, wobei bei Betätigung der Bedieneinheit, z.B. durch Anwahl eines Objektdatensatzes, das gespeicherte Audiosignal abgespielt und akustisch von dem Überwachungspersonal überprüft werden kann. Auf diese Weise kann nach einer automatisierten Klassifizierung des Audiosignals eine manuelle oder menschliche Überprüfung der Klassifizierung durchgeführt werden.

Weiterhin ist aus der DE 198 26 220 A1 eine Vorrichtung zur Erkennung von Rissen in einem Radkranz oder ähnlicher Schäden am Fahrwerk oder auch am Antrieb von Schienenfahrzeugen während der Fahrt bekannt, welche Sensoren, Signalumformer, Vorverarbeitungs-Computer, Analyse- und Ausgabecomputer aufweist. Mit den Sensoren (z. B. Mikrofon und/oder Beschleunigungsaufnehmer oder ähnliches) wird der Abrollschall bzw. der Körperschall (Schwingungen) oder andere geeignete physikalische Merkmale für die Laufeigenschaften von Teilen des Fahrwerkes aufgenommen, analysiert und zum Vergleich mit anderen, zur gleichen Zeit oder auch von früher aufgenommenen Werten an den Analyse- und Ausgabecomputer weitergeleitet werden. Aus der Analyse des im Computer angestellten Vergleichs lassen sich Abweichungen feststellen, die bei Überschreitung eines festgelegten Grenzwertes zu einem Warnsignal beim Lokführer oder in der Stelle führen, die für die Überwachung des Fahrbetriebes zuständig ist (z. B. eine Leitzentrale beim führerlosen Zugverkehr). Werden als Sensoren Mikrofone pro Rad verwendet, kann pro Fahrzeug ein Computer zur Vorverarbeitung zur Anwendung kommen. Der Vorverarbeitungs-Computer fragt dabei über die Signalumformer die einzelnen Sensoreinheiten nach einer vorgegebenen Reihenfolge ab (Polling) und verrichtet eine Vorverarbeitung des Schwingungsspektrums, wie z. B. Filterung von Grundgeräuschen, die sich aus dem Fahrtwind ergeben (gegebenenfalls geschwindigkeitsabhängig) oder auch Unterdrückung des normalen Laufgeräusches (eventuell ebenfalls geschwindigkeits- und/oder gleiskörperabhängig), sowie Filterung von einmaligen (sich zufällig ergebenden) Geräuschveränderungen. Kommen Beschleunigungsaufnehmer zur Anwendung, kann gegebenenfalls auf den Vorverarbeitungscomputer verzichtet werden, da die Kapazität des zentralen Computers für die Vorverarbeitung und Auswertung ausreichen kann. Die im Vorverarbeitungs-Computer gewonnenen Informationen werden dem zentralen Zugeinheits- oder Zugcomputer (Analyse- und Ausgabecomputer) zur Analyse in Form von Datenpaketen übermittelt. Bei der Analyse wird - sofern dies vom Vorverarbeitungs-Computer noch nicht erfolgte - als erstes das Spektrum der aufgenommenen Schwingungen erstellt und gefiltert. Dieses Primärspektrum dient zum Vergleichen mit anderen Spektren, den Sekundärspektren, beispielsweise Spektrum eines anderen Rades des gleichen Drehgestells oder Spektrum eines baugleichen Drehgestells des gleichen Wagens, aufgenommen zur gleichen Zeit, wie das Primärspektrum oder Spektrum eines baugleichen Drehgestells eines anderen Wagens, aufgenommen zur gleichen Zeit, wie das Primärspektrum oder Spektrum des gleichen oder eines baugleichen Drehgestells, aufgenommen auf der gleichen Strecke bei einer früheren Fahrt. In Abhängigkeit von der Analyse des Spektrums selbst und der Abweichungen von einem oder mehreren der Sekundärspektren werden zum Warnsignal entsprechende Zusatzinformationen einschließlich Entscheidungsvorschläge, die in Abhängigkeit von der Art und Größe der Abweichungen angeboten werden, ausgegeben.

Ein ähnliches Verfahren und eine Vorrichtung zur akustischen Beurteilung eines Kraftfahrzeuges ist aus der DE 10 2007 051 261 A1 bekannt. Hierzu werden mittels mindestens eines Mikrofons akustische Signale des Kraftfahrzeuges aufgenommen und vorverarbeitet, wobei mittels Analyseverfahren aus den vorverarbeiteten Signalen Merkmale ermittelt werden, die dann in Klassen klassifiziert werden, wobei dann die Klassifizierungsergebnisse mit einer Referenz-Klassifizierung verglichen werden. Das einem akustischen Fingerabdruck darstellende Klassifizierungsergebnis des Kraftfahrzeuges kann dann beispielsweise mit dem Serienklang, das dann die Referenz-Klassifizierung darstellt, verglichen werden. Bei auffälligen Abweichungen kann dann beispielsweise eine Anfrage an einen zentralen Datenbankrechner gestartet werden, ob dieser Fehlerursachen kennt, die zu solch einer Abweichung führen können. Hierzu wird der zentrale Datenbankrechner derart ausgebildet, dass dieser Zugriff zu allen Bauteilständen hat, Seriennummern zuordnen und Serienklangbilder der Fahrzeugreihen verwalten kann. Durch Mustererkennung kann dann der zentrale Datenbankrechner typische Fehlerbilder (Fehlermuster + Fehlerursachen + Zusatzinformationen) anbieten, wobei die zentrale Datenbank die übermittelten realen Klangbilder sowie die Abweichungen der realen Klangbilder von den bisherigen Serienklangbildern gleichzeitig vorzugsweise zur adaptiven Anpassung seiner Serienklangbilder verwendet. Dabei kann vorzugsweise vorgesehen sein, dass die Kraftfahrzeuge wiederholt ihre realen Klangbilder an den Datenbankrechner übermitteln, auch wenn kein Fehler aufgetreten ist. Alternativ kann der Vergleich des Klassifizierungs-Ergebnisses mit einer Referenz-Klassifizierung auch im Kraftfahrzeug selbst erfolgen. Auch dabei kann die Referenz-Klassifizierung ein Serienklangbild sein oder aber das zuvor aufgenommene eigene Klangbild des Kraftfahrzeuges, dessen Veränderung dann beobachtet wird. Vorzugsweise erfolgt die Klassifizierung kontinuierlich, so dass es sich um ein lernendes System handelt. Vorzugsweise kommen mehrere Mikrofone zur Anwendung, wobei vorzugsweise auf die ohnehin verbauten Mikrofone im Kraftfahrzeug zurückgegriffen wird. Dies sind beispielsweise das oder die Mikrofone einer Freisprecheinrichtung. Bei der Entwicklungsphase oder bei Vorserien können auch zusätzliche Mikrofone an definierten Stellen angeordnet werden. Vorzugsweise umfässt die Vorverarbeitung mindestens eine Filterung in einem begrenzten Frequenzbereich, beispielsweise Luftschall nur im Bereich von 20 Hz-15 kHz, was bereits zu einer erheblichen Datenreduktion ohne wesentlichen Informationsverlust führt. Weiterhin werden in der Vorverarbeitung der akustischen Signale akustische Sprachsignale und/oder andere Audio-Signale herausgefiltert, was ebenfalls zu einer erheblichen Datenreduktion ohne wesentlichen Informationsverlust führt. Um sicherzustellen, dass eine Durchführung der Analyseverfahren nur in den Phasen erfolgt, in denen keine akustischen Sprachsignale und/oder Audio-Signale erfasst werden, kann der Kraftfahrzeugführer oder ein Servicetechniker einen PTT-Taster (Push to Talk) manuell betätigen, nicht sprechen und vorher alle Audio-Quellen ausschalten. Die Vorverarbeitung umfasst dabei eine Normierung auf Führungsgrößen (wie Gang und/oder die Drehzahl und/oder die Last) und/oder eine Sortierung der akustischen Signale bzw. der normierten Signale. Die Analyseverfahren umfassen eine Fourier-Analyse und/oder Wavelet-Analyse und/oder eine Terzanalyse und/oder eine Ordnungsanalyse und/oder Korrelationen zwischen Signalen verschiedener Mikrofone, wobei als Merkmale psychoakustische Größen und/oder Koeffizienten und/oder Beträge und/oder Phasen und/oder Frequenzen und/oder Laufzeiten und/oder Resonanzparameter und/oder Korrelationen bestimmt werden. Um die Anzahl der Merkmale zur Trennung der Klassen zu minimieren kommen Verfahren wie Karhunen-Loeve-Transformationen, Add-On-Verfahren, Knock-Out-Verfahren, Fisher-Diskriminante und/oder F-Ratio zur Anwendung. SchlieOlich wird die Referenz-Klassifizierung modellbasiert oder adaptiv (beispielsweise das Alter der Bauteile im Modell) oder durch überwachtes oder nichtüberwachtes Lernen ermittelt, wobei die Klassifizierung der Merkmale in Klassen durch Schwellwerte und/oder Mittelwert-Abstände und/oder gewichtete Abstände und/oder die Methode des nächsten Nachbarn und/oder eines Bayes-Klassifikator und/oder eine Fuzzy-Logik und/oder ein neuronales Netz erfolgt. Die Vorrichtung zur akustischen Beurteilung eines Kraftfahrzeuges umfasst dabei einen Messdatenerfassungsblock und eine Auswerteeinheit. Die Auswerteeinheit weist eine Signalvorverarbeitung (Rauschbefreiung und eine Filterung), eine Merkmalsanalyse, eine Klassifikation (Trennung der Merkmale in Klassen = akustischer "Fingerabdruck" des Kraftfahrzeuges) und eine Speicher- und Bewertungseinheit (zum Vergleichen des Parametersatz mit einer festen modellbasierten Referenz-Klassifikation oder einer gelernten Referenz-Klassifikation aus den vorangegangenen Klassifikationen) auf. Die Speicher- und Bewertungseinheit schließlich ist über eine bidirektionale Schnittstelle mit einer zentralen Datenbank verbunden, um dann zur Verbreiterung deren Datenbasis eine gelernte Referenz-Klassifikation, Fehlerbilder und Eigenanalysen zu übermitteln. Andererseits kann die zentrale Datenbank auch Hilfestellung leisten und beispielsweise anhand der übermittelten Daten des Kraftfahrzeugs bzw. der dort angeordneten Speicher- und Bewertungseinheit eine Mustererkennung durchführen und typische Fehlerbilder (Fehlermuster + Fehlerursachen + Zusatzinfos) der Speicher- und Bewertungseinheit im Kraftfahrzeug anbieten.

Weiterhin ist aus der WO 2009/104968 A1 eine Einbruchmeldeanlage bekannt, bei der nicht das hörbare Signal, sondern die unhörbare Signale ausgewertet werden, um die Ursache des Geräusches zu ermitteln. Hierzu wird mit Filtern eine Trennung in Niederfrequenzsignal (Frequenzbereich von etwa 1 - 5 Hz) und Hochfrequenzsignal (Frequenzbereich von etwa 5 - 20 Hz) vorgenommen und ein Komparator vergleicht die unhörbaren Signale in den beiden Kanälen miteinander. Im Einzelnen weist die Einbruchmeldeanlage gemäß der WO 2009/104968 A1 einen Einbruchmelder, vorzugsweise ein Mikrofon, und einen damit in Verbindung stehenden Prozessor auf, wobei der Einbruchmelder einen Umformer zum Aufnehmen mechanischer Schwingungsenergie in einem bestimmten Frequenzbereich und Umwandeln dieser in elektrische Schwingungsenergie in demselben Frequenzbereich enthält. Im jeweiligen Kanal ist ein A/D-Wandler vorhanden, um Digitalsignale des jeweiligen Kanals bereitzustellen, welche die elektrische Schwingungsenergie darstellen. Der Prozessor ist mit Mitteln zur digitalen Signalverarbeitung der an seinen beiden Eingängen bereitgestellten Signale versehen, wobei der Melder darüber hinaus den Niederfrequenzkanal zum Aussortieren und Zuführen eines Niederfrequenzsignalteils des Frequenzbereichs zu einem ersten Eingang des Prozessors und den Hochfrequenzkanal zum Aussortieren und Zuführen des Restsignalteils des Frequenzbereichs zu einem zweiten Eingang des Prozessors umfasst. Weiterhin umfasst der Prozessor eine Signalerkennungseinheit, in der die verarbeiteten Digitalsignale mit erlernten und gespeicherten Signalmustern der beiden Kanäle verglichen werden. Insbesondere werden die vom Vergleicher zum Vergleichen bestimmter Digitalsignalcharakteristika in dem Restsignalteil und zum Bereitstellen einer Menge von Vergleichsergebnissignalen an weitere Prozessoruntereinheiten zur weiteren Verarbeitung zugeführt. Schließlich sind eine Assoziationsuntereinheit zum Herstellen einer Assoziation zwischen einem Vergleichsergebnissignal und einem aus einer gespeicherten Worttabelle auszuwählenden Wort und eine Statusuntereinheit zum Festlegen eines Status auf Basis ausgewählter Wörter vorgesehen. Der Niederfrequenzkanal verarbeitet Signale in einem Frequenzteilbereich von etwa 1 - 5 Hz, während der Hochfrequenzkanal ein Kanal ist, der Signale in einem Frequenzteilbereich von etwa 5 - 20 Hz verarbeitet. Der Vergleicher ist zum Vergleichen von Sequenzen eingehender Energieschübe in dem Niederfrequenzsignalteil mit Sequenzen in dem Restsignalteil oder zum Vergleichen von Dauern eingehender Energieschübe in dem Niederfrequenzsignalteil mit Dauern in dem Restsignalteil oder zum Vergleichen von Zeiträumen zwischen Energieschüben in dem Niederfrequenzsignalteil mit Zeiträumen in dem Restsignalteil oder zum Vergleichen von bestimmten Charakteristika der Signalereignisse, wie absolute maximale Amplituden, in Energieschüben in dem Niederfrequenzsignalteil mit Ereignissen in dem Restsignalteil u.a. eingerichtet, um auf der Basis des Vergleichs zwischen den beiden Kanälen die Ursache des unhörbaren Geräusches (beispielsweise Bewegung im Bereich 1Hz bis 5 Hz, Wind im Bereich 5 Hz bis 15 Hz, Tür schließen zunächst a) Bewegung im Bereich 1Hz bis 5 Hz und dann b)Anschlag an den Türrahmen im Bereich 5 Hz bis 15 Hz) zu ermitteln.

Schließlich ist aus der US 2012/0262294 A1, ein System und ein Verfahren zur Überwachung einer begrenzten und vorgegebenen Zone mit akustischem Sensor bekannt, welcher unhörbare seismische Wellen detektiert und bei welchem das System eine mehrstufige Alarmierung (abhängig von dem Empfang eines Bestätigungssignals innerhalb einer vorbestimmbaren Zeitdauer) ermöglicht. Im Einzelnen erfasst eine Überwachungseinrichtung eine begrenzte und vorbestimmte Überwachungszone und weist mindestens den akustischen Sensor auf, der in der Überwachungszone angeordnet ist, und der dazu ausgelegt ist, eine erfasste unhörbare seismische Welle, die durch das Auftreten einer Aktivität in der Überwachungszone resultiert, in ein Informationssignal zu konvertieren. Weiterhin sind eine Verarbeitungsvorrichtung, die dazu ausgelegt ist das Informationssignal zu empfangen, ein Übertragungssystem für die Übertragung des Informationssignals zur Verarbeitungsvorrichtung, ein Alarmierungs-System, um mindestens einen Alarm zu senden, und eine Datenbank vorgesehen. Die Datenbank beinhaltet Referenzcharakteristiken, die sich auf diese vorbestimmte Bezugsaktivität beziehen.

Die Verarbeitungsvorrichtung umfasst ein Analyse-System, welches das Informationssignals, ausgehend von den Referenzcharakteristiken von mindestens einer vorbestimmten Bezugsaktivität der Datenbank analysiert, und zur Sendung von mindestens einem Alarm auf der Grundlage der Analyse des Informationssignals das System aktiviert. Insbesondere ist mindestens der Sensor für seismische Wellen, die sich in einem festen Milieu ausbreiten, vorgesehen und das System zur Sendung von mindestens einem Alarm umfasst zur Erzeugung eines Alarms der ersten Stufe eine Vorrichtung, die in der Überwachungszone angeordnet ist, und zur Erzeugung eines Alarms der zweiten Stufe eine Vorrichtung außerhalb der Überwachungszone. Das Analyse-System ist dazu ausgelegt, ein Bestätigungssignal zu empfangen und - falls infolge der Erzeugung des Alarms der ersten Stufe in einem vorbestimmten Zeitrahmen kein Bestätigungssignal empfangen wird - die Vorrichtung zur Erzeugung des Alarms der zweiten Stufe zu aktivieren. Falls infolge der Erzeugung des Alarms der ersten Stufe in einem vorbestimmten Zeitrahmen ein Bestätigungssignal empfangen wird, werden die Referenzcharakteristiken einer vorbestimmten Bezugsaktivität der Datenbank aktualisiert. Hierzu ist eine Bestätigungsvorrichtung vorgesehen, die in der Überwachungszone angeordnet ist und die durch einen Nutzer zur Erzeugung des Bestätigungssignals aktivierbar ist. Das Analyse-System weist im Einzelnen folgende Bearbeitungsschritte auf:
- ausgehend von den Referenzcharakteristiken der Datenbank auswählen einer vorbestimmten Bezugsaktivität der Datenbank, die einer Aktivität entspricht, aus der das Informationssignal resultiert,
- speichern eines Wertes zum Zeitpunkt des Auftretens der erkannten Aktivität und zuordnen dieses Werts zur ausgewählten Bezugsaktivität, und
- entscheiden, in Abhängigkeit von mindestens diesem Wert und von der zugeordneten Bezugsaktivität, ob das System zur Sendung von mindestens einem Alarm aktiviert wird oder nicht.

Wie die vorstehende Würdigung des Standes der Technik aufzeigt, sind auf verschiedenen technischen Gebieten unterschiedlich ausgestaltete Verfahren und Vorrichtungen zur automatischen Erkennung und Klassifizierung von akustischen Signalen in einem Überwachungsbereich bekannt. In der Regel werden die Signale zur Aufzeichnung und zum Vergleich mit einem in einer Bibliothek vorher eingespeicherten Referenzmuster einer zentralen Stelle zugeführt, was zu einem erheblichen Aufwand bei der Aufzeichnung und Klassifikation (feste modellbasierte Referenz-Klassifikation oder gelernte Referenz-Klassifikation aus den vorangegangenen Klassifikationen) führt. Deshalb fehlen in der Praxis kostengünstige Verfahren und Vorrichtungen in Hinblick auf das Einfließen aller signalbeeinflussenden Faktoren in das jeweilige Erkennungsmodell, insbesondere unter Berücksichtigung der aktuellen Situation und einfachen Konfiguration bzw. Adaption in einer Trainingsphase durch den Anwender/Benutzer.

Der Erfindung liegt die Aufgabe zugrunde, ausgehend von bekannten Verfahren und Vorrichtungen zur automatischen Erkennung und Klassifizierung von hörbaren akustischen Signalen in einem Überwachungsbereich, diese derart auszugestalten, dass bei der Konfiguration durch den Anwender alle signalbeeinflussenden Faktoren mit in das jeweilige Erkennungsmodell einfließen.

Diese Aufgabe wird ausgehend von einer Vorrichtung nach dem Oberbegriff des Patentanspruchs 1, dadurch gelöst, dass zur Vorverarbeitung der akustischen Signale ein einen Mikrocomputer oder Mikroprozessor, ein Aufzeichnungs-Modul, ein Klassifizierungs-Modul, eine Aufzeichnungsdatenbank und eine Modellbibliothek aufweisendes akustisches Sensorsystem vorgesehen ist, welches mit dem Signalempfänger in Verbindung steht dessen Ausgangssignale parallel dem im akustischen Sensorsystem angeordneten Modul für deren Aufzeichnung und dem Modul zur Klassifizierung zugeführt sind, dass mit dem Aufzeichnungs-Modul die Aufzeichnungsdatenbank des akustisches Sensorsystems verbunden ist und in der Aufzeichnungsdatenbank das Signal im Format einer Audiodatei gespeichert ist, dass zum bidirektionalen Datenaustausch und zur Steuerung mit dem eine Schnittstelle aufweisenden akustischen Sensorsystem ein externes Modul zur Modellbildung in Verbindung steht und das externe Modul zur Modellbildung über die Schnittstelle die Aufzeichnungen importiert und aus ihnen entsprechende Modelle erzeugt und das externe Modul zur Modellbildung über die Schnittstelle mit einer Modellbibliothek des entsprechenden Sensorsystems in Verbindung steht und in der Modellbibliothek das von einem Anwender in einer Trainingsphase ausgewählte Modell abgespeichert ist, dass das Klassifizierungs-Modul mit der Modellbibliothek verbunden ist und dass das Klassifizierungs-Modul über eine weitere Schnittstelle mit einer externen Auswertungs-Applikation in Verbindung steht, und für den Fall der Erkennung eines Signals, das Klassifizierungsergebnis an die externe Auswertungs-Applikation sendet, so dass das akustische Sensorsystem gleichermaßen als Aufzeichnungssystem für beliebige akustische Signale während einer Trainingsphase, als auch als Klassifikator bekannter Signalmuster während einer Klassifizierungsphase dient und die dafür notwendigen Erkennungsmodelle aus den von dem Sensorsystem vorher aufgezeichneten Signalen erzeugt werden und dass jedes akustische Sensorsystem seine eigenen Aufzeichnungen zur Modellbildung nutzt und dieses Modell danach auch nur von diesem Sensorsystem zur Klassifizierung eingesetzt wird.

Schließlich wird diese Aufgabe durch ein Verfahren nach dem Oberbegriff gemäß Patentanspruch 4 dadurch gelöst, dass zur Vorverarbeitung der akustischen Signale ein einen Mikrocomputer oder Mikroprozessor aufweisendes akustisches Sensorsystem vorgesehen ist, welches mit dem Signalempfänger in Verbindung steht und das Sensorsystem ein Aufzeichnungs-Modul, das Klassifizierungs-Modul, eine Aufzeichnungsdatenbank, eine Modellbibliothek und mindestens eine Schnittstelle zu einem externen Modul zur Modellbildung aufweist, bei dem
a) die Ausgangssignale des Signalempfängers parallel sowohl dem Aufzeichnungs-Modul als auch dem Klassifizierungs-Modul des akustischen Sensorsystems zugeführt werden,
b) das akustische Sensorsystem gleichermaßen als Aufzeichnungssystem für beliebige akustische Signale während einer Trainingsphase, als auch als Klassifikator bekannter Signalmuster während einer Klassifizierungsphase dient und die dafür notwendigen Erkennungsmodelle aus vorher aufgezeichneten Signalen erzeugt werden,
c) ein Anwender die Möglichkeit hat, aus allen, in der Trainingsphase des jeweiligen akustischen Sensorsystems aufgezeichneten Signalen, die für die Klassifizierung relevanten Signale auszuwählen,
d) aus der Menge der ausgewählten Geräusche dann vom externen Modul zur Modellbildung automatisch ein entsprechendes Erkennungsmodell erzeugt und dem Klassifizierungs-Modul des jeweiligen akustischen Sensorsystems zur Verfügung gestellt wird und
e) jedes akustische Sensorsystem seine eigenen Aufzeichnungen zur Modellbildung nutzt und dieses Modell danach auch nur von diesem Sensorsystem zur Klassifizierung eingesetzt wird.

Die erfindungsgemäße Vorrichtung weist den Vorteil auf, dass sich alle maßgeblichen Komponenten zur Signalverarbeitung und Klassifizierung in einem intelligenten Gerät, dem akustischen Sensor bzw. akustischen Sensorsystem, befinden. Beim erfindungsgemäßen Verfahren dient der Sensor gleichermaßen als Aufzeichnungssystem für beliebige akustische Signale während einer Trainingsphase, als auch als Klassifikator bekannter Signalmuster während der Klassifizierungsphase. Ein entscheidender Vorteil der Erfindung im Vergleich zum aktuellen Stand der Technik ist, dass jedes Gerät/ akustischen Sensor /akustisches Sensorsystem seine eigenen Aufzeichnungen zur Modellbildung nutzt und dieses Modell danach auch vorzugsweise/nur von diesem Gerät zur Klassifizierung eingesetzt wird. Dadurch wird erreicht, dass alle signalbeeinflussenden Faktoren mit in das jeweilige Erkennungsmodell einfließen und dem Anwender auf überraschend einfache Art und Weise die Konfiguration in der Trainingsphase ermöglicht wird. Während der Klassifizierungsphase werden durch die aktuellen akustischen Eingangssignale, die Modellparameter des zugrundeliegenden Erkennungsmodells adaptiert. Dies führt dazu, dass die Erkennungsmodelle im Laufe des Betriebes ständig optimiert werden. Der akustische Sensor lernt also, durch diese Optimierung der Modellparameter, ständig dazu und verbessert dadurch die Qualität der Klassifizierung.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: die Netzstruktur und eine Übersicht aller Komponenten der erfindungsgemäßen Vorrichtung,
- FIG. 2: die allgemeine Struktur einer Vernetzung von akustischen Sensoren nach FIG.1 und

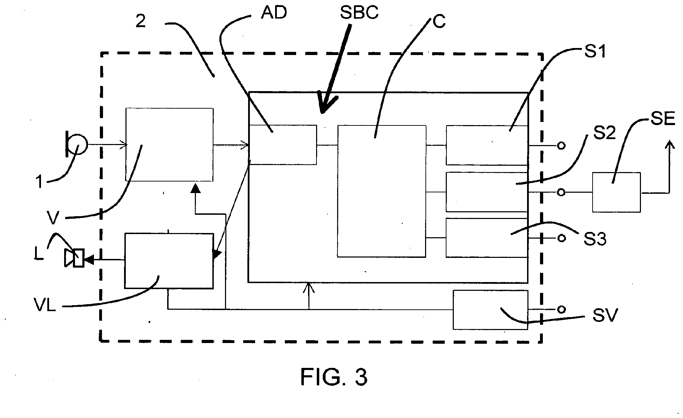

- FIG. 3: eine Ausführungsform für ein Sensorsystem/intelligenter akustischer Sensor nach der Erfindung.

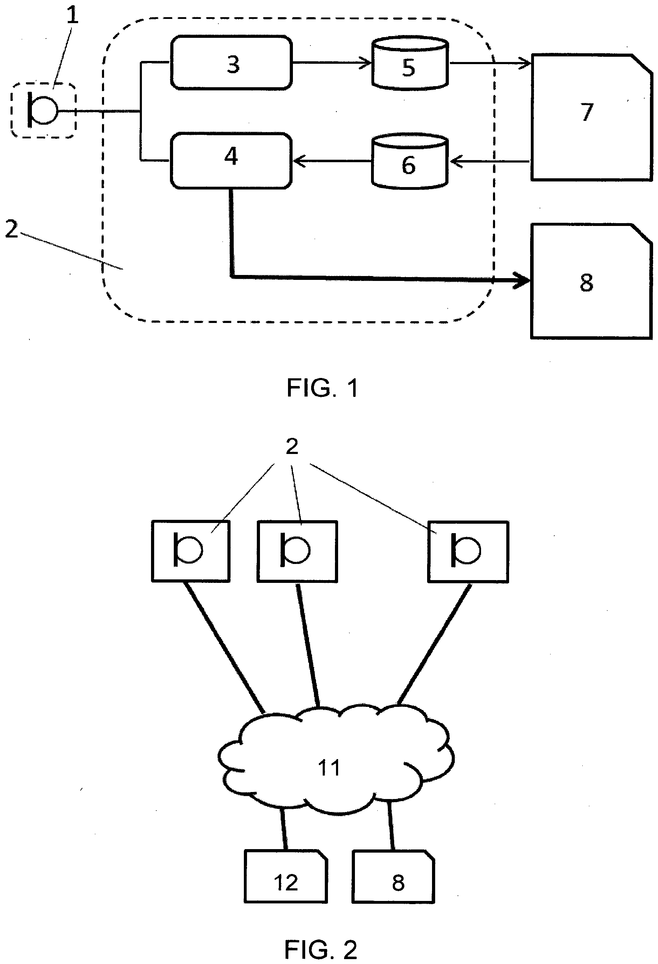

Die FIG.1 zeigt eine Übersicht aller Komponenten der erfindungsgemäßen Vorrichtung. Der Signalempfänger 1, insbesondere ein Mikrofon, empfängt ein akustisches Signal und leitet dieses zu einem akustischen Sensorsystem 2, welches einen Mikrocomputer oder Mikroprozessor C aufweist weiter. Im Sensorsystem 2 wird gesteuert vom Mikroprozessor C das Signal parallel einem Aufzeichnungsmodul 3 und einem Modul zur Klassifizierung/Klassifikator 4 zugeführt. Das Aufzeichnungsmodul 3 hat die Aufgabe, das Signal im Format einer Audiodatei aufzuzeichnen und in einer Aufzeichnungsdatenbank 5 abzulegen. Der Klassifikator 4 steht für seine Aufgabe, das Eingangssignal zu klassifizieren, mit einer Modellbibliothek 6 in Verbindung. Diese Bibliothek 6 beinhaltet die akustischen Modelle aller bekannten Signale. Ist keine Modellbibliothek 6 vorhanden, kann der Klassifikator 4 nicht arbeiten. Er ist in diesem Fall inaktiv. Zur Erzeugung einer Modellbibliothek 6 werden die vom Sensorsystem 2 selbst erzeugten Aufzeichnungen der Aufzeichnungsdatenbank 5 herangezogen, wobei für die Behandlung unbekannter Signale (Erst-Inbetriebnahme bzw. iterativer Prozess, welcher im Laufe der Zeit immer robustere Modelle erzeugt) ein Selbstlernverfahren angewandt wird.

Eine externe Komponente Modul zur Modellbildung/Modell-Builder 7 importiert die Aufzeichnungen, erzeugt aus ihnen entsprechende Modelle und legt diese in der Modellbibliothek 6 des entsprechenden Sensorsystems 2 ab. Der Modell-Builder 7 kann mehrere parallel arbeitende Sensorsysteme 2 verwalten und ist zentraler Bestandteil einer Management-Applikation (siehe FIG. 2, Management-Applikation 13). Unter einer Applikation wird vorliegend ein Anwenderprogramm bzw. ein Modul bestimmter Funktionalität verstanden. Wenn der Klassifikator 4 ein Signal erkannt hat, sendet er das Klassifizierungsergebnis an eine Auswertungs-Applikation 8. Diese Applikation 8 ist für die weitere Verarbeitung dieser Informationen zuständig und kann entsprechende Aktionen, wie z.B. Alarmierung einer Zentraleneinheit oder Steuerungsaufgaben ausführen.

Im Sensorsystem 2 können die beiden Module für Aufzeichnung 3 und Klassifizierung 4 von der Management-Applikation 13 aus aktiviert und deaktiviert werden. Damit ist es möglich, die beiden Betriebsarten Training und Klassifizierung getrennt zu nutzen oder beide parallel zu betreiben. Ersteres wird zum Beispiel genutzt, um bei einer Erstinbetriebnahme Aufzeichnungen für die Modellerzeugung zu erhalten. Durch den Parallelbetrieb ist es möglich, in der Klassifizierungsphase auch Signale aufzuzeichnen, welche später dazu genutzt werden können, vorhandene Modellbibliotheken 6 zu erweitern. Die Behandlung unbekannter Signale (Selbstlernverfahren) erfolgt dabei wie folgt:
Ein akustisches Signal, welches vom Sensorsystem 2 keinem Modell, mit einer vom Benutzer vorgebbaren Wahrscheinlichkeit (beispielsweise mindestens von 80 %), zugeordnet werden kann, wird in seine Klassifizierungsmerkmale zerlegt und als Menge (Vektor) dieser Merkmale in einen dafür vorgesehen Speicherbereich der Auszeichnungs-Datenbasis 5 abgelegt. Zu bestimmten, insbesondere periodisch wiederkehrenden Zeiten von beispielsweise einer Stunde, wird im Sensorsystem 2 ein Selbstlernprozess gestartet, indem Ähnlichkeiten in der Menge der unbekannten Muster gefunden werden. Dafür wird ein Verfahren im Bereich der Mustererkennung genutzt, beispielsweise die Clusteranalyse. In diese Analyse werden auch die gemittelten Merkmals-Vektoren der dem System 2 bekannten Modelle (Muster) einbezogen. Damit lässt sich ein bekanntes Modell durch zwar ähnliche aber aktuell nicht ausreichend sicher erkannte Merkmale verbessern, so dass beim nächsten Auftreten dieses Signals eine Klassifizierung durchgeführt werden kann. Es handelt sich um einen iterativen Prozess, welcher im Laufe der Zeit immer robustere Modelle erzeugt.

Weiterhin werden ähnliche aber dem System unbekannte Muster gruppiert und im nächsten Build-Vorgang (Modell-builder 7) als neues Modell vorgeschlagen.

Die FIG. 2 zeigt die allgemeine Struktur einer Vernetzung von akustischen Sensoren 2. Im Einzelnen weist das Sensorsystem 2 einen mit dem Signalempfänger 1 verbundenen Verstärker V auf, dessen verstärktes Audio-Ausgangssignal einem Analog-Digital-Wandler AD zugeführt ist und der Mikrocomputer C ist sowohl mit dem Analog-Digital-Wandler AD als auch mit mindestens einer Schnittstelle S1 zum Datenaustausch und zur Steuerung des Sensorsystems 2 über das Netzwerk 11 verbunden. Die Grundlage der Vernetzung einer Sensordomäne bildet ein klassisches lokales Netzwerk (LAN) 11 oder die drahtlose Variante WLAN über eine Schnittstelle S2 und daran angeschlossener Sende-Empfangseinheit SE. Analog-Digital-Wandler AD (bzw. im Fall der akustischen Wiedergabe im Überwachungsbereich: Digital-Analogwandler, welcher mit einem Verstärker VL und einem diesem nachgeordneten Lautsprecher L in Verbindung steht/verbunden ist), Mikrocomputer C und Schnittstellen S1 bis S3 können als Single Board Computer auf einer Leiterplatte angeordnet sein, welche ebenso wie der Verstärker V oder Verstärker VL mit einer Stromversorgung SV verbunden ist. Weiterhin kann auch eine Schnittstelle S3 zur Ausgabe von Videosignalen beispielsweise eines HDMI-Geräts, wie z.B. zum Anschluss eines Monitors zur Konfiguration direkt an den Sensor 2, vorgesehen sein.

Zur Stromversorgung des Sensorsystems 2 stehen verschiedenen Varianten alternativ zur Verfügung:
a) Netzteil: Die Speisung des Sensors erfolgt durch ein Netzteil direkt am Ort des Sensors,
b) Solar+Akku: Die Speisung erfolgt durch ein Solarsystem direkt am Ort des Sensors. Das Solarsystem besteht aus einem Solarpanel, einem Akku und einer Steuereinheit. Es ist zu beachten, dass für den ungestörten Dauerbetrieb genügend Solarleistung benötigt wird, bzw. die Akkukapazität für die Überbrückungszeit groß genug dimensioniert sein muss.
c) Verkabelung: Die Speisung erfolgt durch eine separate Verkabelung. Die Stromversorgungseinheit befindet sich in einer Zentraleneinheit.
d) Power over Ethernet (PoE): Die Speisung erfolgt über das bestehende Netzwerkkabel. Die Stromversorgungseinheit befindet sich in einer Zentraleneinheit.

Die externen Komponenten Management-Applikation 12 und Auswertungs-Applikation 8 nutzen übliche Netzwerkprotokolle zum Datenaustausch und zur Steuerung der akustischen Sensoren/Sensormodul 2 mittels des Microcomputers C, welcher die Voraussetzungen für Vernetzung via LAN oder WLAN bereitstellt. Durch diese Art der Vernetzung lassen sich ganze Sensordomänen realisieren. In den Domänen arbeiten die einzelnen Sensormodule 2 völlig autark, lassen sich aber über klassische Netzwerkfunktionen konfigurieren und steuern.

Bei dem erfindungsgemäßen Verfahren werden die Erkennungsmodelle aus vorher aufgezeichneten Signalen erzeugt. Der Anwender hat so die Möglichkeit, aus allen, in der Trainingsphase aufgezeichneten Signalen, die für die Klassifizierung relevanten Signale auszuwählen. Aus der Menge der ausgewählten Geräusche wird dann automatisch ein entsprechendes Erkennungsmodell erzeugt und dem Klassifikator 4 zur Verfügung gestellt. Die Management-Applikation 12 unterstützt den Anwender weitestgehend bei dieser Konfiguration. Die Trainingsphase kann auch parallel zu einer Klassifikationsphase aktiviert werden. Dadurch ist es möglich, während der Klassifizierung unbekannte Signale zu kennzeichnen und später dem Klassifizierungsmodell hinzuzufügen. In einer nächsten Klassifizierungsphase werden dann diese Geräusche ebenfalls erkannt.

Im Einzelnen steht für die Administration und Verwaltung der Sensoren 2 in der Management-Applikation 12 das Modul Sensor-Manager/ein Programm "SensorManager.exe" zur Verfügung. Zudem kann jedem einzelnen Sensor 2 via "SensorManager" ein individuelles, d.h. für diesen Sensor 2 zutreffendes Modell zur Verfügung gestellt werden, nach welchem dieser Sensor 2 dann vorzugsweise /nur arbeitet. Beim Erststart des Programms, wird der "SensorManager" einmalig bezüglich der Pfade für die Projekte und Daten konfiguriert. Diese Konfiguration wird in einer entsprechenden XML-Datei abgelegt, die dann für zukünftige Starts herangezogen wird. Vorzugsweise ist für die Nutzung ein installiertes HTK (Hidden Markov Model Toolkit) vorgesehen. Dabei wird für den "SensorManger" das Binär-Verzeichnis des Hidden Markov Model Toolkit (HTK) und das .Net-Framework in der aktuellsten Version benötigt.

Zum Starten ist unter den Programmen der Eintrag "SensorManager" auszuwählen. Da die Datei "SensorManConfig.xml" beim Erststart noch nicht verfügbar ist, d.h. dass der "SensorManager" noch nicht konfiguriert ist, erscheint eine Fehlermeldung, welche zu bestätigen ist und das Menü des Programms "SensorManager" öffnet sich.

In einem akustischen Klassifizierungssystem können mehrere akustische Sensoren 2 parallel betrieben werden. Jeder einzelne Sensor 2 arbeitet dabei mit einem für ihn speziell berechnetem Erkennungsmodell. Für die Konfiguration der Pfade ist aus dem Menü "Optionen" der Eintrag "Konfiguration" auszuwählen und ein Fenster "Konfiguration" zur Festlegung der Parameter, wie beispielsweise:
a) im Bereich "Sensor" die nachfolgenden Parameter:

| | |
|---|---|
| ClassificationService | Name des Analysedienstes des Sensors |
| RecordingService | Name des Aufzeichnungsdienstes des Sensors |

b) im Bereich "SignalProcessing" die nachfolgenden Parameter:

| | |
|---|---|
| AmplitudeMax | Maximaler Amplitudenhub |
| SampleFrequency | Abtastfrequenz s in Hz |
| SamplePeriodS | Abtastintervall in s |
| WindowSize | Anzahl der Sample des Beobachtungsfensters |

c) im Bereich "Speech" die nachfolgenden Parameter:
- ProjectRootPath: Projektpfad mit Ordner sah, in welchem die Projekte gespeichert werden
- ToolPath: Pfad zu einer vorher zu installierenden Tool-Umgebung (beispielsweise Binär-Verzeichnis eines Hidden Markov Model Toolkit) und

d) im Bereich "VAD" die nachfolgenden Parameter:
- VadEndDurationS: Mindestpause in s zum Trennen von verschiedenen Äußerungen. Diese Zeit muss größer der Zwischenwortpausen sein.
- VadEnergyThreshold: Energieschwellwert in Prozent. Es handelt sich hierbei um den Energieanteil in einem Signalfenster. Die Werte liegen in der Regel zwischen 3..15%.
- VadIntroDurationS: Vorspannzeit in s. Dieser Bereich wird nach Erkennen der Spracheingabe dem Sprachsignal mit zugeordnet. Dadurch ist es möglich, auch leise Eingangspassagen vollständig zu erfassen.
- VadMinSpeechDurationS: Mindestsprechzeit in s, summiert auf alle Sprachanteile der Äußerung.

Unter einem Projekt wird eine Menge bestehend aus 1 bis x intelligenten Sensoren 2 verstanden. Die Sensoren 2 werden innerhalb von Projekten verwaltet. Nach dem Start des Moduls Sensor-Manager/Menü"SensorManagers" kann ein neues Projekt hinzugefügt werden, wobei der Name des Projekts einzugeben ist und innerhalb des Projektbaums der Eintrag des Projektnamens erscheint. Die im Projekt eingegebenen Projekteigenschaften können angezeigt werden, beispielsweise im Bereich "General" sind dies die entsprechenden Parameter:

| | |
|---|---|
| Description | Beschreibung des Projektes |
| Name | Name des Projekts |

Gleicher Verfahrensablauf gilt für das Hinzufügen eines Sensors 2 und - nach Auswahl innerhalb des Eintrags eines Sensors im Projektbaum - für die Anzeige der Sensoreigenschaften im sich öffnenden Menü. Diese Parameter sind:
1) im Bereich "Daten":
- AudioEncoding: Angabe des zum Einsatz kommenden Audio-Codierungsverfahrens
- DeleteAfterImport: Ist diese Option auf True gesetzt, wird nach dem erfolgreichen Import das File gelöscht.
- SharedPath: Ist der Sensor-Pfad, in welchem die Files für den Sensor abgelegt werden.

2) Im Bereich "General":

| | |
|---|---|
| Description | Beschreibung des Sensors |
| Name | Name des Sensors |

3) Im Bereich "Model":
NbOfMixtures Anzahl der Mischverteilungskomponenten des zu erzeugenden HMM, Intervall (1...5)
NbOfStates Anzahl der Zustände des zu erzeugenden HMM, Intervall (5... 15) Diese Einstellungen beeinflussen die Erzeugung des Hidden Markov Modell (HMM)-Prototypen sehr und wirken sich damit maßgeblich auf die Erkennungsqualität aus.

4) im Bereich "SSH":

| | |
|---|---|
| Address | IP-Adresse des Sensors |
| Password | Passwort des Sensors |
| User | Benutzername für den Sensor |

Für jeden Sensor 2 wird ein individuelles Modell erstellt, aufgrund dessen der Sensor 2 dann arbeitet. Dazu wird (werden) eine (mehrere) entsprechende Trainingsphase(n) benötigt, um den Sensor 2 auch individuell zu konfigurieren und auf den Einsatzort anzupassen. Hierfür kann vom Anwender jeder einzelne Sensor 2 in einen Recording-Modus (Trainingsmodus) geschaltet werden. Während dieser vom Anwender gestarteten Recording-Phase nimmt der Sensor 2 die verschiedensten Geräusche der Umgebung, Eingaben etc. auf. Diese werden in Abhängigkeit von den eingestellten Parametern in einzelne Dateien gespeichert. Wird vom Anwender die Recording-Phase beendet (je nach Speicherkapazität auch mehrere Tage), so können nun diese aufgezeichneten Geräusche importiert, selektiert und klassifiziert werden. Aus den dann bestehenden Geräuschen kann ein Modell erstellt werden. Dieses wird via Menü "Export" zum Sensor 2 übertragen und dieser kann dann im Listen-Modus (Klassifizierungsphase) darauf reagieren. Seine Ergebnisse werden an ein Auswertungsprogramm gesendet und dort ausgewertet. Um die Aufnahmen bearbeiten zu können, müssen diese importiert und zum Anhören einer Aufnahme abgespielt werden. Weiterhin können die Aufzeichnungen vom Anwender verschriftet, d.h. mit Namen versehen (klassifiziert) werden. Nachdem alle Aufnahmen verschriftet wurden, kann daraus automatisch ein entsprechendes Modell erstellen werden. Ist das Modell fertig erstellt, kann es vom Anwender zum Sensor 2 exportiert werden und dieses Modell steht dem Sensor 2 dann ab dieser Zeit zur Verfügung, mit welchem er automatisch arbeiten kann. Weiterhin steht im Rahmen der Erfindung ein Lauschmodus zur Verfügung, wozu der entsprechende Sensor zu aktivieren/deaktivieren ist.

Zur Kommunikation des Sensors 2 mit einer Zentraleinheit stehen dabei mehrere Verfahren alternativ oder parallel zur Verfügung. Bei der Kommunikation spielt vor allem das Datenvolumen und damit verbunden die notwendige Bandbreite eine zentrale Rolle. Die meisten Daten werden in der Trainings- bzw. Konfigurationsphase zwischen den Sensoren 2 und der Zentrale übertragen. In dieser Phase findet ein bidirektionaler Datenaustausch statt. In der Betriebsphase hingegen beschränkt sich die Kommunikation auf Statusmeldungen und Ereignisse vom Sensor zur Zentrale. Da jeder Sensor 2 einen integrierten Microcomputer C beinhaltet, erfolgt die Kopplung der Sensoren 2 untereinander und mit den Management- und Auswertungsapplikationen 12, 8 über:
- LAN (Ethernet): Die Verbindung vom Sensor zur Zentrale erfolgt durch Ethernet Verkabelung
- WiFi: Die Verbindung vom Sensor zur Zentrale erfolgt drahtlos durch WLAN (WiFi)
- GSM/UMTS: Die Verbindung vom Sensor zur Zentrale erfolgt drahtlos durch ein Mobil-Netz
- ISM-Funk: Die Verbindung vom Sensor zur Zentrale erfolgt drahtlos durch Funk in einem ISM-Band (Dieses Verfahren ist nur für geringe Daten in der Betriebsphase geeignet)

Diese Art der Kopplung ist technisch sehr ausgereift und ökonomisch günstig realisierbar.

Einem Menü "Console" können Informationen über die Kommunikation zwischen Sensor 2 und einem Modul Sensor-Manager (in der Zeichnung nicht dargestellt) in der Zentrale entnommen werden. Das Modul Sensor-Manager dient der Administration und Verwaltung von akustischen Sensoren 2. Diese sind innerhalb von Projekten konfigurierbar. Eine Änderung des Inhaltes deutet auf eine funktionierende Kommunikationsverbindung (SSH) hin.

Die Signalempfänger 1, z.B. Mikrofon oder Schallwandler, werden direkt mit dem Gerät/Sensor 2 verbunden oder befinden sich mechanisch (beispielsweise mittels Schwanenhals) in unmittelbarer Nähe; weiter ist es möglich, den Signalempfänger 1 im Gehäuse des intelligenten Sensors 2 anzuordnen und dieses auf den Überwachungsbereich auszurichten.

Welcher Signalempfänger 1 zum Einsatz kommt, hängt stark von der Art der zu überwachenden Signale und dem Medium in dem sich die Signale ausbreiten ab. Bekannte Signalempfänger sind
- kapazitive Wandler (Kondensatormikrofone),
- elektrodynamische Wandler (dynamische Mikrofone, Tonabnehmer) oder
- piezoelektrische Wandler.
Die Signalverarbeitung im Gerät/akustischen Sensor 2 ist beim erfindungsgemäßen Verfahren weitestgehend unabhängig vom eingesetzten Signalempfänger 1.

Ein Vorteil der Erfindung im Vergleich zum Stand der Technik ist, dass jedes Gerät/akustischer Sensor 2 seine eigenen Aufzeichnungen zur Modellbildung nutzt und dieses Modell danach auch nur von diesem Gerät zur Klassifizierung eingesetzt wird. Dadurch wird erreicht, dass alle signalbeeinflussenden Faktoren mit in das jeweilige Erkennungsmodell einfließen. Signalbeeinflussende Faktoren sind zum Beispiel:
- Echos, hervorgerufen durch Laufzeiten, Geometrie und Beschaffenheit des . Raumes, in welchem sich der Sensor befindet.
- Typ und Toleranz der Signalempfänger (z.B. Mikrofone) und Signalverarbeitung.
- Ortsabhängige Pegel der Eingangssignale.
- stationäre Hintergrundgeräusche.

Ein weiterer Vorteil des erfindungsgemäßen Verfahrens im Vergleich zum Stand der Technik ist die Behandlung unbekannter Signale im Selbstlernverfahren.

Das erfindungsgemäße Verfahren wird nachfolgend anhand von Anwendungsbeispielen näher beschrieben und erläutert. Im Anwendungsbereich Hausautomatisierung kann der akustische Sensor/Mikrofon 1 als Quelle von Steuerungs- und Reglungsaktivitäten in intelligenten Hausautomatisierungslösungen fungieren. Zur Steuerung können Geräusche, wie z.B. das Läuten eines Telefons, das Öffnen einer Tür oder auch ein vorher trainierter Sprachbefehle, genutzt werden. Hierbei existieren keinerlei Beschränkungen, was die Art der akustischen Signale betrifft. Eine Voraussetzung für ein gutes Funktionieren ist, in der Trainingsphase einige dieser Geräusche aufzuzeichnen und einmal manuell zu klassifizieren (siehe vorstehend).

Ähnlich wie im oben beschriebenen Anwendungsfall, kann das Sensorsystem im Bereich der Alarmierung eingesetzt werden. Ein Beispiel dafür ist die Erkennung von Notfallsituationen im häuslichen oder öffentlichen Umfeld. Dazu gehört das Erkennen von Hilferufen oder speziellen Geräuschen, die auf einen Notfall hinweisen. Die Klassifizierungsresultate werden in diesem Fall an spezielle Alarmierungssysteme weitergeleitet.

Auch für Überwachungsaufgaben kann der akustische intelligente Sensor 2 genutzt werden. Hierzu zählen zum Beispiel die Früherkennung von Fehlerzuständen bei der Maschinen- und Produktionsüberwachung bei industrieller Nutzung. Ein weiteres Beispiel ist die Überwachung von Serverräumen, wobei dabei die Tatsache genutzt werden kann, dass die Server-Hardware bei bestimmten Situationen akustische Signale (Töne) sendet, welche dann vom Sensor 2 erfasst werden können. Ein weiteres Beispiel ist die Überwachung einer Freifläche oder eines Bereichs in einem Gebäude oder Gebäudekomplex mit einem Netzwerk von intelligenten Audio Sensoren 2, welche autonom arbeiten und ihre Ergebnisse einer zentralen Komponente in einer Zentrale mitteilen, nämlich das akustische Erkennen von vorher definierten Geräuschen bei einer physischen Beschädigung von Objekten (beispielsweise: Graffiti auf Waggons im Bahnbereich, Erkennen des Durchlaufens von Gleisschotter, Klacken der Mischkugel, Sprühgeräusche und das anschließende Lokalisieren des Ausgangsgeräusches). Die weitere Verarbeitung dieser Ergebnisse erfolgt dann anwendungsabhängig durch die Module der Zentrale.

Das erfindungsgemäße Verfahren ermöglicht es auf überraschend einfache Art und Weise auf der Basis der intelligenten Sensoren 2 mehrere Technologien zu vereinen, die von der Audio- und Videoerkennung über die Positionsbestimmung bis hin zur Datenanalyse und Ereignisdetektion reichen.

## Patentansprüche

1. Vorrichtung zur automatischen Erkennung und Klassifizierung von hörbaren akustischen Signalen mit mindestens einem im Überwachungsbereich angeordneten Signalempfänger und einem Modul zur Klassifizierung des akustischen Signals und Ausgabe einer Klassifikationsinformation, **dadurch gekennzeichnet, dass** zur Vorverarbeitung der akustischen Signale ein einen Mikrocomputer oder Mikroprozessor (C), ein Aufzeichnungs-Modul (3), ein Klassifizierungs-Modul (4), eine Aufzeichnungsdatenbank (5) und eine Modellbibliothek (6) aufweisendes akustisches Sensorsystem (2) vorgesehen ist, welches mit dem Signalempfänger (1) in Verbindung steht dessen Ausgangssignale parallel dem im akustischen Sensorsystem (2) angeordneten Modul für deren Aufzeichnung (3) und dem Modul zur Klassifizierung (4) zugeführt sind, dass mit dem Aufzeichnungs-Modul (3) die Aufzeichnungsdatenbank (5) des akustisches Sensorsystems (2) verbunden ist und in der Aufzeichnungsdatenbank (5) das Signal im Format einer Audiodatei gespeichert ist, dass zum bidirektionalen Datenaustausch und zur Steuerung mit dem eine Schnittstelle (S1, S2) aufweisenden akustischen Sensorsystem (2) ein externes Modul zur Modellbildung (7) in Verbindung steht und das externe Modul zur Modellbildung (7) über die Schnittstelle (S1,S2) die Aufzeichnungen importiert und aus ihnen entsprechende Modelle erzeugt und das externe Modul zur Modellbildung (7) über die Schnittstelle (S1, S2) mit einer Modellbibliothek (6) des entsprechenden Sensorsystems (2) in Verbindung steht und in der Modellbibliothek (6) das von einem Anwender in einer Trainingsphase ausgewählte Modell abgespeichert ist, dass das Klassifizierungs-Modul (4) mit der Modellbibliothek (6) verbunden ist und
dass das Klassifizierungs-Modul (4) über eine weitere Schnittstelle (S3) mit einer externen Auswertungs-Applikation (8) in Verbindung steht, und für den Fall der Erkennung eines Signals, das Klassifizierungsergebnis an die externe Auswertungs-Applikation (8) sendet, so dass das akustische Sensorsystem (2) gleichermaßen als Aufzeichnungssystem für beliebige akustische Signale während einer Trainingsphase, als auch als Klassifikator (4) bekannter Signalmuster während einer Klassifizierungsphase dient und die dafür notwendigen Erkennungsmodelle aus den von dem Sensorsystem (2) vorher aufgezeichneten Signalen erzeugt werden und dass jedes akustische Sensorsystem (2) seine eigenen Aufzeichnungen zur Modellbildung nutzt und dieses Modell danach auch nur von diesem Sensorsystem (2) zur Klassifizierung eingesetzt wird.

2. Vorrichtung nach Anspruch 1, **dadurch gekennzeichnet, dass** das externe Modul zur Modellbildung (7) in einer Management-Applikation (12) angeordnet ist, welche über ein Netzwerk (11) mit den akustischen Sensorsystemen (2) verbunden ist und das Aufzeichnungs-Modul (3) und/oder das Klassifizierungs-Modul (4) des jeweiligen akustischen Sensorsystems (2) aktiviert und deaktiviert.

3. Vorrichtung nach Anspruch 2, **dadurch gekennzeichnet, dass** das jeweilige Sensorsystem (2) einen mit dem Signalempfänger (1) verbundenen Verstärker (V) aufweist, dessen verstärktes Audio-Ausgangssignal einem Analog-Digital-Wandler (AD) zugeführt ist und dass ein Mikrocomputer (C) sowohl mit dem Analog-Digital-Wandler (AD) als auch mit mindestens einer Schnittstelle (S1, S2, S3) zum Datenaustausch und zur Steuerung des Sensorsystems (2) über das Netzwerk (11) verbunden ist.

4. Verfahren zur automatischen Erkennung und Klassifizierung von hörbaren akustischen Signalen mit mindestens einem im Überwachungsbereich angeordneten Signalempfänger und einem Modul zur Klassifizierung des akustischen Signals und Ausgabe einer Klassifikationsinformation, **dadurch gekennzeichnet, dass** zur Vorverarbeitung der akustischen Signale ein einen Mikrocomputer oder Mikroprozessor (C) aufweisendes akustisches Sensorsystem (2) vorgesehen ist, welches mit dem Signalempfänger (1) in Verbindung steht und das Sensorsystem (2) ein Aufzeichnungs-Modul (3), das Klassifizierungs-Modul (4), eine Aufzeichnungsdatenbank (5), eine Modellbibliothek (6) und mindestens eine Schnittstelle (S1, S2) zu einem externen Modul zur Modellbildung (7) aufweist, bei dem
a) die Ausgangssignale des Signalempfängers (1) parallel sowohl dem Aufzeichnungs-Modul (3) als auch dem Klassifizierungs-Modul (4) des akustischen Sensorsystems (2) zugeführt werden,
b) das akustische Sensorsystem (2) gleichermaßen als Aufzeichnungssystem für beliebige akustische Signale während einer Trainingsphase, als auch als Klassifikator (4) bekannter Signalmuster während einer Klassifizierungsphase dient und die dafür notwendigen Erkennungsmodelle aus vorher aufgezeichneten Signalen erzeugt werden,
c) ein Anwender die Möglichkeit hat, aus allen, in der Trainingsphase des jeweiligen akustischen Sensorsystems (2) aufgezeichneten Signalen, die für die Klassifizierung relevanten Signale auszuwählen,
d) aus der Menge der ausgewählten Geräusche dann vom externen Modul zur Modellbildung (7) automatisch ein entsprechendes Erkennungsmodell erzeugt und dem Klassifizierungs-Modul (4) des jeweiligen akustischen Sensorsystems (2) zur Verfügung gestellt wird und
e) jedes akustische Sensorsystem (2) seine eigenen Aufzeichnungen zur Modellbildung nutzt und dieses Modell danach auch nur von diesem Sensorsystem (2) zur Klassifizierung eingesetzt wird.

5. Verfahren nach Anspruch 4, **dadurch gekennzeichnet, dass** mit dem jeweiligen akustischen Sensorsystem (2) ein in einer externen Management-Applikation (12) angeordnetes Modul zur Modellbildung (7) über ein Netzwerk (11) verbunden ist und dass die externe Management-Applikation (12) den Anwender weitestgehend bei dieser Auswahl und Konfiguration unterstützt.

6. Verfahren nach Anspruch 4, **dadurch gekennzeichnet, dass** das jeweilige akustische Sensorsystem (2) einen Mikrocomputer (C) aufweist, mittels dessen die Kopplung der Sensorsysteme (2) untereinander, mit der externen Managementapplikation (12) und einer externen Auswertungsapplikation (8) erfolgt und dass das Aufzeichnungs-Modul (3) und das Klassifizierungs-Modul (4) von der externen Managementapplikation (12) aus aktiviert und deaktiviert werden, wodurch es möglich ist, die beiden Betriebsarten Training und Klassifizierung getrennt zu nutzen oder beide parallel zu betreiben.

7. Verfahren nach einem oder mehreren der Ansprüche 4 bis 6, **dadurch gekennzeichnet, dass** wenn das Klassifizierungs-Modul (4) des jeweiligen akustischen Sensorsystems (2) ein Signal erkannt hat, dieses das Klassifizierungsergebnis an die externe Auswertungs-Applikation (8) sendet, die externe Auswertungs-Applikation (8) für die weitere Verarbeitung dieser Informationen zuständig ist und Alarmierung oder Steuerungsaufgaben ausführt.

8. Verfahren nach einem oder mehreren der Ansprüche 4 bis 7, **dadurch gekennzeichnet, dass** ein akustisches Signal, welches vom jeweiligen akustischen Sensorsystem (2) keinem Modell mit einer vom Benutzer vorgebbaren Wahrscheinlichkeit, zugeordnet werden kann, in seine Klassifizierungsmerkmale zerlegt und als Menge dieser Merkmale in einen dafür vorgesehen Bereich der Auszeichnungs-Datenbasis (5) abgelegt wird und dass zu bestimmten Zeiten im jeweiligen akustischen Sensorsystem (2) ein Selbstlernprozess gestartet wird, bei dem mittels eines Mustererkennungsverfahrens Ähnlichkeiten in der Menge der unbekannten Muster ermittelt werden.

9. Verfahren nach einem oder mehreren der Ansprüche 4 bis 8, **dadurch gekennzeichnet, dass** das akustische Sensorsystem (2) einen Verstärker (VL) aufweist, welcher mit einem Digital-Analog-Wandler (AD) und einem Lautsprecher (L) in Verbindung steht, wobei gesteuert durch den Mikroprozessor (C) ein Eigentest des oder gegenseitiger Test der jeweils anderen Sensorsysteme (2) bei der Erst-Inbetriebnahme oder im laufenden Betrieb durchgeführt wird oder Informationen im Überwachungsbereich akustisch ausgegeben werden.

10. Verfahren nach Anspruch 9, **dadurch gekennzeichnet, dass** der gegenseitige Test durch wechselseitige Wiedergabe eines bestimmten Signals/Geräusches und Aufnahme/Klassifizierung durch das jeweils andere Sensorsystem (2) erfolgt.

## Claims

1. A device for automatically detecting and classifying audible acoustic signals, comprising at least one signal receiver arranged in the monitoring area and a module for classifying the acoustic signal and outputting classification information, **characterized in that** for preprocessing the acoustic signals are provided a microcomputer or microprocessor (C), a recording module (3), a classification module (4), a recording database (5) and an acoustic sensor system (2) having a model library (6), which acoustic sensor system (2) is connected to the signal receiver (1), the output signals of which are fed in parallel to the module for their recording (3) and the module for classification (4) arranged in the acoustic sensor system (2), that the recording database (5) of the acoustic sensor system (2) is connected to the recording module (3) and the signal in the format of an audio file is stored in the recording database (5), that the acoustic sensor system (2) is connected for bidirectional data exchange and for control by means of the one interface (S1, S2) to an external module for modelling (7) and the external module for modelling (7)imports the recordings via the interface (S1, S2) and generates corresponding models from them, and the external module for modelling (7) is connected to a model library (6) of the corresponding sensor system via the interface (S1, S2) and the model selected by a user in a training phase is stored in the model library (6), that the classification module (4) is connected to the model library (6) and that the classification module (4) is connected via a further interface (S3) with an external evaluation application (8), and, in the event of a signal being detected, the classification result is transmitted to the external evaluation application (8) so that the acoustic sensor system (2) is used equally as a recording system for any acoustic signals during a training phase and as a classifier (4) of known signal patterns during a classification phase and the recognition models required therefor are generated from the signals previously recorded by the acoustic sensor system (2), and **in that** each acoustic sensor system (2) uses its own recordings for model formation and this model is then also used only by this sensor system (2) for classification.

2. Device according to claim 1, **characterized in that** the external module for model formation (7) is arranged in a management application (12), which is connected to the acoustic sensor systems (2) via a network (11) and activates and deactivates the recording module (3) and/or the classification module (4) of the respective acoustic sensor system (2).

3. Device according to claim 2, **characterized in that** the respective acoustic sensor system (2) has an amplifier (V) connected to the signal receiver (1), the amplified audio output signal of which is fed to an analog-to-digital converter (AD), and **in that** a microcomputer (C) is connected both to the analog-to-digital converter (AD) and to at least one interface (S1, S2, S3) for data exchange and for controlling the sensor system (2) via the network (11).

4. A method for automatically detecting and classifying audible acoustic signals, comprising at least one signal receiver arranged in the monitoring area and a module for classifying the acoustic signal and outputting classification information, **characterized in that** for preprocessing the acoustic signals a sensor system (2) is provided having a microcomputer or microprocessor (C), which sensor system (2) is connected to the signal receiver (1) and the sensor system (2) has a recording module (3), the classification module (4), a recording database (5), a model library (6) and at least an interface (S1, S2) to an external module for model formation (7), in which:
a) the output signals of the signal receiver (1) are fed in parallel both to the recording module (3) and to the classification module (4) of the acoustic sensor system (2),
b) the acoustic sensor system (2) is used equally as a recording system for any acoustic signals during a training phase and as a classifier (4) of known signal patterns during a classification phase and the recognition models required therefor are generated from previously recorded signals,
c) a user has the possibility of selecting the signals which are relevant for the classification from all signals recorded in the training phase of the respective acoustic sensor system (2),
d) from the set of selected sounds, a corresponding recognition model is then automatically generated by the external module for model formation (7) and is made available to the classification module (4) of the respective acoustic sensor system (2) and
e) each acoustic sensor system (2) uses its own recordings for model formation and this model is then also used only by this sensor system (2) for classification.

5. Method according to claim 4, **characterized in that** a module, which is arranged in an external management application (12), for model formation (7) is connected to the respective acoustic sensor system (2) via a network (11), and **in that** the external management application (12) supports the user as far as possible in this selection and configuration.

6. The method according to claim 4, **characterized in that** the respective acoustic sensor system (2) having a microcomputer (C), by means of which the coupling of the acoustic sensor systems (2) to one another, to the external management application (12) and to an external evaluation application (8) is carried out, and **in that** the recording module (3) and the classification module (4) are activated and deactivated by the external management application (12), as a result of which it is possible to use the two operating modes training and classification separately or to operate both in parallel.

7. The method as claimed in one or more of claims 4 to 6, **characterized in that** if the classification module (4) of the respective acoustic sensor system (2) has recognized a signal which it sends the classification result to the external evaluation application (8), the external evaluation application (8) is responsible for the further processing of this information and carries out alerting or control tasks.

8. Method according to one or more of claims 4 to 7, **characterized in that** an acoustic signal, which cannot be assigned by the respective acoustic sensor system (2) to any model having a probability which can be predetermined by the user, is broken down into its classification features and stored as an amount of these features in a region of the recording database (5) provided for this purpose, and **in that** a self-learning process is started at specific times in the respective acoustic sensor system (2), in which similarities in the quantity of the unknown patterns are determined by means of a pattern recognition method.

9. Method according to one or more of claims 4 to 8, **characterized in that** the acoustic sensor system has an amplifier (VL) which is connected to a digital-to-analog converter (AD) and a loudspeaker (L), wherein a self-test of the or mutual test of the respective other acoustic sensor systems (2) is carried out under the control of the microprocessor (C) during the first start-up or during ongoing operation or information is acoustically output in the monitoring region.

10. Method according to claim 9, **characterized in that** the mutual test is carried out by alternately reproducing a specific signal/noise and recording/classification by the respective other acoustic sensor system (2).

## Revendications

1. Dispositif pour détecter et classer automatiquement des signaux acoustiques audibles, comprenant au moins un récepteur de signaux disposé dans la zone de surveillance et un module pour classer le signal acoustique et délivrer des informations de classification, **caractérisé en ce que** pour le prétraitement des signaux acoustiques, il est prévu un micro-ordinateur ou microprocesseur (C), un module d'enregistrement (3), un module de classification (4), une base de données d'enregistrement (5) et un système de capteur acoustique (2) ayant une bibliothèque de modèles (6), lequel système de capteur acoustique (2) est connecté au récepteur de signal (1), dont les signaux de sortie sont alimentés en parallèle au module pour leur enregistrement (3) et au module de classification (4) disposé dans le système de capteurs acoustique (2), que la base de données d'enregistrement (5) du système de capteurs acoustique (2) est connecté au module d'enregistrement (3) et le signal au format d'un fichier audio est stocké dans la base de données d'enregistrement (5), que le système de capteur acoustique (2) est connecté pour un échange de données bidirectionnel et pour le contrôle au moyen de la première interface (S1, S2) vers un module externe de modélisation (7) et le module externe de modélisation (7) importe les enregistrements via l'interface (S1, S2) et en génère les modèles correspondants, et le module externe de modélisation (7) est connecté à une bibliothèque de modèles (6) du système de capteurs acoustique (2) correspondant via l'interface (S1, S2) et le modèle sélectionné par un utilisateur dans une phase d'apprentissage est stocké dans la bibliothèque de modèles (6), que le module de classification (4) est connecté à la bibliothèque de modèles (6) et que le module de classification (4) est connecté via une autre interface (S3) à une application d'évaluation externe (8) et, en cas de un signal étant détecté, le résultat de la classification est transmis à l'application d'évaluation externe (8) de sorte que le système de capteur acoustique (2) est utilisé de la même manière comme système d'enregistrement pour tout signal acoustique pendant une phase d'apprentissage et comme classificateur (4) modèles de signaux connus pendant une phase de classification et les modèles de reconnaissance requis à cet effet sont générés à partir des signaux précédemment enregistrés par le système de capteur acoustique (2), et **en ce que** chaque système de capteur acoustique (2) utilise ses propres enregistrements pour la formation du modèle et ce modèle est alors également utilisé uniquement par ce système de capteur acoustique (2) pour la classification.

2. Dispositif selon la revendication 1, **caractérisé en ce que** le module externe de formation de modèle (7) est agencé dans une application de gestion (12), qui est reliée aux systèmes de capteurs acoustique (2) via un réseau (11) et active et désactive le module d'enregistrement (3) et /ou le module de classification (4) du système de capteur acoustique respectif (2).

3. Dispositif selon la revendication 2, **caractérisé en ce que** le système de capteurs acoustique respectif (2) comporte un amplificateur (V) connecté au récepteur de signal (1), dont le signal de sortie audio amplifié est envoyé à un convertisseur analogique-numérique (AD), et **en ce qu'**un micro-ordinateur (C) est connecté à la fois au convertisseur analogique-numérique (AD) et à au moins une interface (S1, S2, S3) pour l'échange de données et pour commander le système de capteurs acoustique (2) via le réseau (11).

4. Procédé de détection et de classification automatique des signaux acoustiques audibles, comprenant au moins un récepteur de signaux disposé dans la zone de surveillance et un module de classification du signal acoustique et de sortie des informations de classification, **caractérisé en ce que** pour prétraiter les signaux acoustiques, un système de capteurs acoustique (2) comporte un micro-ordinateur ou microprocesseur (C), lequel système de capteurs acoustique (2) est connecté au récepteur de signal (1) et le système de capteurs acoustique (2) a un module d'enregistrement (3), le module de classification (4), un enregistrement d'une base de données (5), d'une bibliothèque de modèles (6) et d'au moins une interface (S1, S2) vers un module externe pour la formation de modèles (7), dans laquelle:
a) les signaux de sortie du récepteur de signaux (1) sont envoyés en parallèle à la fois au module d'enregistrement (3) et au module de classification (4) du système de détection acoustique (2),
b) le système de capteur acoustique (2) est utilisé de la même manière comme système d'enregistrement pour tous les signaux acoustiques pendant une phase d'apprentissage et comme classificateur (4) de modèles de signaux connus pendant une phase de classification et les modèles de reconnaissance requis à cet effet sont générés à partir d'un enregistrement antérieur signaux,
c) un utilisateur a la possibilité de sélectionner les signaux qui sont pertinents pour la classification parmi tous les signaux enregistrés dans la phase d'apprentissage du système de capteur acoustique respectif (2),
d) à partir de l'ensemble de sons sélectionnés, un modèle de reconnaissance correspondant est alors automatiquement généré par le module externe pour la formation du modèle (7) et est mis à la disposition du module de classification (4) du système de capteur acoustique respectif (2) et
e) chaque système de capteur acoustique (2) utilise ses propres enregistrements pour la formation du modèle et ce modèle est alors également utilisé uniquement par ce système de capteur (2) pour la classification.

5. Procédé selon la revendication 4, **caractérisé en ce qu'**un module, qui est agencé dans une application de gestion externe (12), pour la formation du modèle (7) est connecté au système de capteur acoustique respectif (2) via un réseau (11), et **en ce que** l'application de gestion externe (12) assiste autant que possible l'utilisateur dans cette sélection et cette configuration.

6. Procédé selon la revendication 4, **caractérisé en ce que** le système de capteur acoustique respectif (2) comportant un micro-ordinateur (C), au moyen duquel le couplage des systèmes de capteurs acoustique (2) entre eux, à l'application de gestion externe (12) et à une application d'évaluation externe (8) est effectuée, et **en ce que** le module d'enregistrement (3) et le module de classification (4) sont activés et désactivés par l'application de gestion externe (12), à la suite de quoi il est possible d'utiliser les deux modes de fonctionnement d'apprentissage et de classification séparément ou de fonctionner les deux en parallèle.

7. Procédé selon une ou plusieurs des revendications 4 à 6, **caractérisé en ce que** si le module de classification (4) du système de capteur acoustique respectif (2) a reconnu un signal, il envoie le résultat de classification à l'application d'évaluation externe (8), l'application d'évaluation externe (8) est responsable du traitement ultérieur de ces informations et exécute des tâches d'alerte ou de contrôle.

8. Procédé selon une ou plusieurs des revendications 4 à 7, **caractérisé en ce qu'**un signal acoustique, qui ne peut être attribué par le système de capteur acoustique respectif (2) à aucun modèle ayant une probabilité qui peut être prédéterminée par l'utilisateur, est interrompu vers le bas dans ses caractéristiques de classification et stocké en tant que quantité de ces caractéristiques dans une région de la base de données d'enregistrement (5) prévue à cet effet, et **en ce qu'**un processus d'auto-apprentissage est démarré à des moments spécifiques dans le système de capteur acoustique respectif (2) dans lequel les similitudes dans la quantité des motifs inconnus sont déterminées au moyen d'un procédé de reconnaissance de formes.

9. Procédé selon une ou plusieurs des revendications 4 à 8, **caractérisé en ce que** le système de capteur acoustique (2) comporte un amplificateur (VL) qui est connecté à un convertisseur numérique-analogique (AD) et un haut-parleur (L), dans lequel un l'autotest du ou le test mutuel des autres systèmes de capteurs acoustique respectifs (2) est effectué sous la commande du microprocesseur (C) pendant le premier démarrage ou pendant le fonctionnement en cours ou des informations sont émises acoustiquement dans la zone de surveillance.

10. Procédé selon la revendication 9, **caractérisé en ce que** le test mutuel est réalisé en reproduisant alternativement un signal / bruit spécifique et un enregistrement / classement par l'autre système de capteurs respectif (2).
